# EUROPÄISCHE PATENTSCHRIFT

(11) **EP 2 063 079 B1**
(45) Veröffentlichungstag und Bekanntmachung des Hinweises auf die Patenterteilung: **11.08.2010**
(21) Anmeldenummer: 08019648.8
(22) Anmeldetag: 11.11.2008
(51) Int. Cl.: F01N 13/18, F16L 23/16, F16L 27/04, F16L 27/053

(54) **Flexibles Leitungselement für eine Abgasanlage**
Flexible pipe element for an exhaust system
Elément de conduite flexible pour une installation de gaz d'échappement

(30) Priorität: 21.11.2007 DE 202007016256 U
(43) Veröffentlichungstag der Anmeldung: 27.05.2009
(73) Patentinhaber: Witzenmann GmbH, 75175 Pforzheim (DE)
(72) Erfinder: Hornung, Jörg, 75248 Ölbronn-Dürrn (DE); Kolbe, Gerald, 75180 Pforzheim (DE); Rumold, Michael, 75172 Pforzheim (DE)
(74) Vertreter: Lemcke, Brommer & Partner

(56) Entgegenhaltungen:
- EP-A- 0 339 388
- EP-A- 0 718 537
- EP-A- 1 045 185
- DE-A1- 2 509 062
- DE-C- 801 602
- US-A- 4 181 332
- US-A1- 2003 122 376

## Beschreibung

Die vorliegende Erfindung betrifft eine Anschlussverbindung zwischen einem flexiblen Leitungselement und wenigstens einem weiteren Teil einer Abgasanlage eines Kraftfahrzeugs mit Verbrennungsmotor, wobei das flexible Leitungselement aufweist: ein flexibles Leitungsteil, insbesondere Balg, mit wenigstens einem zylindrischen Anschlussende, an dem ein Flanschelement zum Verbinden des flexiblen Leitungsteils mit dem weiteren Teil der Abgasanlage angeordnet ist, zu welchem Zweck das Flanschelement eine vordere Dichtfläche aufweist, wobei die Dichtfläche als im Querschnitt konvex gekrümmte Fläche ausgebildet ist, die mit dem weiteren Teil unter Ausbildung einer Linienanlage zusammenwirkt.

An Anschlussverbindungen der eingangs genannten Art bei flexiblen Leitungselementen, die zum Verbinden von Teilen einer Abgasanlage insbesondere eines Kraftfahrzeugs mit Verbrennungsmotor dienen und die regelmäßig auch als Entkoppelelemente bezeichnet werden, werden heutzutage immer höhere Anforderungen bezüglich ihrer Gasdichtheit gestellt. Dies gilt insbesondere für bestimmte Fahrzeugmodelle im Automobilbereich, bei denen die Warmluft für den Passagierbereich mehr oder weniger direkt aus dem Motorraum entnommen wird. Jedoch auch unter Gesichtspunkten des Umweltschutzes wird eine immer höhere Gasdichtheit für Abgasanlagen gefordert.

Um eine solche Gasdichtheit zu erreichen, Ist in der Vergangenheit insbesondere die Verwendung von zusätzlichen Dichtelementen (Dichtungen) aus einem nachgiebigen Material (z. B. Gummi oder Kunststoff) im Bereich der vorderen Dichtfläche des Flanschelements vorgeschlagen worden. Ein solcher Ansatz, wie er grundsätzlich z. B. aus der DE 25 09 062 A1 bekannt ist, stellt jedoch insbesondere auf dem Gebiet der Abgasanlagen, die aufgrund der durchgeleiteten Verbrennungsabgase eine sehr hohe Temperatur aufweisen können, hohe Anforderungen an das eingesetzte Dichtmaterial, was einerseits mit erhöhtem Aufwand und entsprechenden Kostennachtellen sowie andererseits mit dem Risiko einer thermischen Beschädigung des Dichtmaterials einhergeht.

Ein anderer bekannter Ansatz sieht vor, eine extrem hohe Ebenheit, beispielsweise 0,08, für die vordere Dichtfläche des Flanschelements zu fordern, um auf diese Weise eine metallische Abdichtung ohne zusätzliches Dichtelement zu gewährleisten. Aufgrund des hierfür erforderlichen erhöhten fertigungstechnischen Aufwands ist auch diese Lösung mit entsprechenden Kostennachteilen behaftet. Zudem wird nach dem Stand der Technik das Flanschelement regelmäßig an dem flexiblen Leitungsteil angeschweißt, wodurch es aufgrund des hohen Wärmeeintrags beim Schweißen zu einer thermisch bedingten Verformung der Dichtfläche des Flanschelements kommen kann. Dabei kann es vorkommen, dass eine mit anfänglicher Ebenheit von 0,08 ausgebildete Dichtfläche anschließend nur noch eine Ebenheit von etwa 0,3 aufweist, so dass eine metallische Abdichtung wiederum nicht gewährleistet wäre.

Aus der EP 0 718 537 A1 und der EP 0 339 388 A1 sind weiterhin Lösungen bekannt, bei denen die zusammenwirkenden Dichtflächen zweier Leitungselemente komplementär gekrümmt ausgebildet sind, um flächig dichtend zusammenzuwirken, was ebenfalls einen hohen fertigungstechnischen Aufwand erfordert.

Die EP 1 045 185 A2 zeigt und beschreibt eine Rohrverbindung einer Abgasanlage, bei der eine konvex gekrümmte Fläche eines Flanschelements mit einem konisch ausgebildeten weiteren Teil der Abgasanlage unter Ausbildung einer Linienanlage zusammenwirkt.

Der Erfindung liegt die Aufgabe zugrunde, eine Anschlussverbindung der eingangs genannten Art dahingehend weiterzubilden, dass auch ohne den Einsatz zusätzlicher Dichtelemente eine gasdichte Verbindung mit weiteren Teilen der Abgasanlage erreichbar ist.

Diese Aufgabe wird im Rahmen der vorliegenden Erfindung durch eine Anschlussverbindung mit den Merkmalen des Anspruchs 1 gelöst.

Vorteilhafte Weiterbildungen der erfindungsgemäßen Anschlussverbindung sind Gegenstand von Unteransprüchen, die hiermit durch ausdrückliche Bezugnahme in die Beschreibung aufgenommen werden, um unnötige Textwiederholungen zu vermeiden.

Erfindungsgemäß ist eine Anschlussverbindung zwischen einem flexiblen Leitungselement und wenigstens einem weiteren Teil für eine Abgasanlage insbesondere eines Kraftfahrzeugs mit Verbrennungsmotor, wobei das flexible Leitungselement aufweist: ein flexibles Leitungsteil, insbesondere Balg, mit wenigstens einem zylindrischen Anschlussende, an dem ein Flanschelement zum Verbinden des flexiblen Leitungsteils mit dem weiteren Teil der Abgasanlage angeordnet ist, zu welchem Zweck das Flanschelement eine vordere Dichtfläche aufweist, wobei die Dichtfläche als im Querschnitt konvex gekrümmte Fläche ausgebildet ist und, mit dem weiteren Teil unter Ausbildung einer Linienanlage zusammemwirktund wobei die Dichtfläche derart ausgebildet und angeordnet ist, dass eine Tangente an die Dichtfläche im Anlagebereich existiert,welche senkrecht zur Längsachse des Leitungselements verläuft.

Durch das Schaffen einer im Querschnitt konvex gekrümmten Fläche, die als vordere Dichtfläche des Flanschelements dient, ergibt sich beim Verbinden des flexiblen Leitungselements mit einem entsprechenden weiteren Teil der Abgasanlage eine gasdichte metallische Abdichtung aufgrund einer Linienanlage, die sich im Bereich der gekrümmten Anlagefläche ausbildet, ohne dass in diesem Zusammenhang die Verwendung eines zusätzlichen Dichtelements erforderlich wäre. Insbesondere bei Verwendung eines konstanten Krümmungsradius wird eine derart ausgebildete Dichtfläche auch als ballige Dichtfläche bezeichnet.

In Weiterbildung der erfindungsgemäßen Anschlussverbindung kann vorgesehen sein, dass das Flanschelement als V-Bordflansch ausgebildet ist, so dass die Verbindung in den weiteren Teilen der Abgasanlage unter Verwendung entsprechender V-Schellen erfolgen kann.

Das flexible Leitungsteil ist im Zuge einer bevorzugten Ausgestaltung als ringgewellter Balg aus einem metallischen Werkstoff, insbesondere Stahl, ausgebildet, der außerdem koaxial weitere Innen- und/oder Außenkomponenten aufweisen kann, wie Flammrohre oder Liner bzw. Gestrickemäntel oder Geflechtsschläuche, was dem Fachmann an sich bekannt ist.

Eine andere Weiterbildung sieht vor, dass der Krümmungsradius der Dichtfläche über die Dichtfläche im Wesentlichen konstant ausgebildet ist. Die Stärke der Krümmung hängt dabei vom konkreten Anwendungsfall ab und lässt sich insbesondre über das Verhältnis aus Dichtflächenbreite und Krümmungsradius quantifizieren.

Bevorzugte Ausführungsbeispiele des flexiblen Leitungselements sehen in diesem Zusammenhang vor, dass das genannte Verhältnis aus Dichtflächenbreite und Krümmungsradius zwischen 0,125 und 0,375 beträgt. Ein besonders bevorzugter Wert für das vorstehend genannte Verhältnis ist etwa 0,25, höchst vorzugsweise etwa 0,22.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: eine Ausgestaltung des flexiblen Leitungselements gemäß der vorliegenden Erfindung, teilweise im Längsschnitt; und
- Figur 2: eine Ausschnittsvergrößerung des Bereichs X in Figur 1.

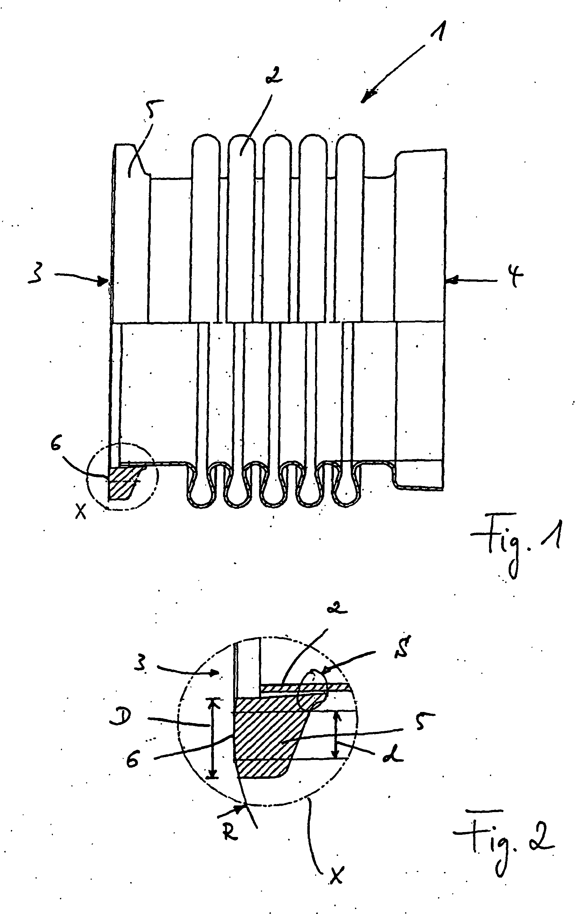

Figur 1 zeigt - teilweise im Längsschnitt - eine Ausgestaltung des flexiblen Leitungselements 1. Dieses weist ein flexibles Leitungsteil auf, das vorliegend als ringgewellter Balg 2 ausgebildet ist.

Das flexible Leitungselement 1 ist für den Einbau in eine (nicht weiter dargestellte) Abgasanlage insbesondere eines Kraftfahrzeugs mit Verbrennungsmotor bestimmt und weist zu diesem Zweck erste und zweite Anschlussenden 3, 4 auf, über die es mit weiteren Elementen der Abgasanlage verbindbar ist. Zumindest das erste Anschlussende 3 ist als zylindrisches Anschlussende ausgebildet, wobei dort endständig ein Flanschelement 5 zum Verbinden des flexiblen Leitungsteils 2 mit weiteren (nicht gezeigten) Teilen der Abgasanlage angeordnet, insbesondere angeschweißt ist, worauf weiter unten anhand der Figur 2 noch genauer eingegangen wird. Das Flanschelement ist vorliegend als V-Bordflansch ausgebildet, so dass das Verbinden mit den genannten weiteren Teilen der Abgasanlage unter Verwendung einer geeigneten V-Bordschelle erfolgen kann.

Zum Schaffen einer gasdichten Verbindung mit den genannten weiteren Elementen der Abgasanlage weist das Flanschelement 5 an dem Anschlussende 3 eine umlaufende vordere Dichtfläche 6 auf, die - wie die Ausschnittsvergrößerung X in Figur 2 zeigt - als ballige Dichtfläche, das heißt als im Querschnitt konvex gekrümmte Dichtfläche ausgebildet ist. Die Dichtfläche 6 weist gemäß der Darstellung in Figur 2 eine Gesamtbreite D und einen konstanten Dichtflächen-Krümmungsradius R auf.

Die Anbindung des Flanschelements 5 an den Balg 2 erfolgt durch Verschweißen in einem Bereich, der in Figur 2 mit dem Bezugszeichen S bezeichnet ist.

Durch das Verschweißen im Bereich S kommt es unter Umständen zu einer Verformung der Dichtfläche 6, so dass sich bei eben ausgebildeten Dichtflächen herkömmlicherweise Werte von etwa 0,3 für die Ebenheit erzielen lassen. Derartige Werte reichen jedoch nicht aus, um eine saubere Fläche für eine metallische Abdichtung ohne zusätzliche Dichtelemente zu gewährleisten, wofür die Ebenheit bei Werten von etwa 0,08 liegen müsste. Durch die im Rahmen der vorliegenden Erfindung vorgeschlagene ballige Ausgestaltung der Dichtfläche 6 kommt es im Zuge des Verbindens des Flanschelements 5 mit den bereits mehrfach erwähnten weiteren Teilen der Abgasanlage zu einer Linienanlage im Bereich der Dichtfläche 6, insbesondere in einem zentralen Dichtflächenbereich der Dichtfläche 6, der gemäß der Darstellung in Figur 2 eine Breite d, d < D, aufweist. Auf diese Weise lässt sich auch ohne die Verwendung zusätzlicher Dichtelemente, welche insbesondere bei Hochtemperaturanwendungen im Bereich von Abgasanlagen für Verbrennungsmotore unerwünscht sind, eine dichte Verbindung des erfindungsgemäßen Leitungselements 1 mit der restlichen Abgasanlage erreichen.

Der Krümmungsradius R der Dichtfläche 6 in Figur 2 ist - wie bereits erwähnt - über die gesamte Dichtfläche 6 im Wesentlichen konstant und kann nach einem besonderen Ausführungsbeispiel 16 mm (R16) betragen. Bei demselben Ausführungsbeispiel ist die gesamte Dichtflächenbreite D = 6 mm, und die zentrale Dichtflächenbreite d beträgt 3,5 mm. Bevorzugte Verhältnisse aus Dichtflächenbreite D, d und Dichtflächen-Krümmungsradius R liegen im Rahmen der vorliegenden Erfindung und bezogen auf das genannte Beispiel etwa zwischen 0,1 und 0,4. Vorzugsweise beträgt das Verhältnis etwa 0,25 und höchst vorzugsweise etwa 0,22. Wie der Fachmann erkennt, ist die vorliegende Erfindung jedoch keinesfalls auf die vorstehend angeführten Zahlenwerte beschränkt, die insbesondere eine typische Ausführungsform näher charakterisieren sollen.

Im Ergebnis ermöglicht die vorliegende Erfindung das gasdichte Verbinden des gezeigten flexiblen Leitungselements 1 mit weiteren Bestandteilen einer Abgasanlage, insbesondere eines Kraftfahrzeugs mit Verbrennungsmotors, ohne dass hierfür gesonderte Dichtmaterialien erforderlich sind, selbst wenn es beim Verschweißen von flexiblem Leitungsteil (Balg) 2 und dem zu Verbindungszwecken vorgesehenen Flanschelement 5 zu einer Verformung der Dichtfläche 6 durch Wärmeeintrag kommt.

## Patentansprüche

1. Anschlussverbindung zwischen einem flexiblen Leitungselement (1) und wenigstens einem weiteren Teil einer Abgasanlage eines Kraftfahrzeugs mit Verbrennungsmotor, wobei das flexible Leitungselement aufweist: ein flexibles Leitungsteil (2), insbesondere Balg, mit wenigstens einem zylindrischen Anschlussende (3), an dem ein Flanschelement (5) zum Verbinden des flexiblen Leitungsteils (2) mit dem weiteren Teil der Abgasanlage angeordnet ist, zu welchem Zweck das Flanschelement (5) eine vordere Dichtfläche (6) aufweist, wobei die Dichtfläche (6) als im Querschnitt konvex gekrümmte Fläche ausgebildet ist und mit dem weiteren Teil unter Ausbildung einer Linienanlage zusammenwirkt, und wobei die Dichtfläche (6) derart ausgebildet und angeordnet ist, dass eine Tangente an die Dichtfläche (6) im Anlagebereich existiert, welche senkrecht zur Längsachse des Leitungselements verläuft.

2. Anschlussverbindung (1) nach Anspruch 1,
**dadurch gekennzeichnet,**
**dass** das Flanschelement (5) an dem Anschlussende (3) des flexiblen Leitungsteils (2) angeschweißt ist.

3. Anschlussverbindung (1) nach Anspruch 1 oder 2,
**dadurch gekennzeichnet,**
**dass** das Flanschelement (5) als V-Bordflansch ausgebildet ist.

4. Anschlussverbindung (1) nach mindestens einem der Ansprüche 1 bis 3,
**dadurch gekennzeichnet,**
**dass** das flexible Leitungsteil (2) als ringgewellter Balg ausgebildet ist.

5. Anschlussverbindung (1) nach mindestens einem der Ansprüche 1 bis 4,
**dadurch gekennzeichnet,**
**dass** der Krümmungsradius (R) der Dichtfläche (6) über die Dichtfläche (6) im Wesentlichen konstant ist.

6. Anschlussverbindung (1) nach Anspruch 5,
**dadurch gekennzeichnet,**
**dass** das Verhältnis aus Breite (D, d) der Dichtfläche (6) und dem Krümmungsradius (R) zwischen 0,1 und 0,4, vorzugsweise etwa 0,25, höchst vorzugsweise etwa 0,22 beträgt.

## Claims

1. Attachment connection between a flexible duct element (1) and at least one further part of an exhaust system of a motor vehicle having a combustion engine, the flexible duct element having: a flexible duct part (2), especially a bellows, having at least one cylindrical attachment end (3), on which there is arranged a flange element (5) for connecting the flexible duct part (2) to the further part of the exhaust system, for which purpose the flange element (5) has a front sealing face (6), the sealing face (6) being in the form of a surface convexly curved in cross-section and cooperating with the further part to form linear contact, and the sealing face (6) being constructed and arranged in such a way that in the contact region there is a tangent to the sealing face (6) running perpendicular to the longitudinal axis of the duct element.

2. Attachment connection (1) according to claim 1,
**characterised in that**
the flange element (5) is welded to the attachment end (3) of the flexible duct part (2).

3. Attachment connection (1) according to claim 1 or 2,
**characterised in that**
the flange element (5) is in the form of a V-cuff flange.

4. Attachment connection (1) according to at least one of claims 1 to 3,
**characterised in that**
the flexible duct part (2) is in the form of an annularly corrugated bellows.

5. Attachment connection (1) according to at least one of claims 1 to 4,
**characterised in that**
the radius of curvature (R) of the sealing face (6) is substantially constant over the sealing face (6).

6. Attachment connection (1) according to claim 5,
**characterised in that**
the ratio of the width (D, d) of the sealing face (6) and the radius of curvature (R) is between 0.1 and 0.4, preferably about 0.25, most preferably about 0.22.

## Revendications

1. Liaison de raccordement entre un élément de conduite flexible (1) et au moins une autre partie d'un système d'échappement d'un véhicule automobile équipé d'un moteur à combustion interne, ledit élément de conduite flexible comprenant : une partie de conduit souple (2), notamment un soufflet présentant au moins une extrémité cylindrique de raccordement (3) sur laquelle se trouve un élément de bridage (5) destiné à la jonction de ladite partie de conduit souple (2) avec ladite autre partie dudit système d'échappement, lequel élément de bridage (5) comporte, à cette fin, une face antérieure d'étanchement (6), ladite face d'étanchement (6) étant réalisée sous la forme d'une surface à courbure convexe en coupe transversale, et coopérant avec ladite autre partie en instaurant un contact linéaire à plat, et ladite face d'étanchement (6) étant réalisée et agencée de manière à tracer dans la zone de contact à plat, vis-à-vis de ladite face d'étanchement (6), une tangente dont l'étendue est perpendiculaire à l'axe longitudinal dudit élément de conduite.

2. Liaison de raccordement (1) selon la revendication 1,
**caractérisée par le fait**
**que** l'élément de bridage (5) est rapporté par soudage sur l'extrémité de raccordement (3) de la partie de conduit souple (2).

3. Liaison de raccordement (1) selon la revendication 1 ou 2,
**caractérisée par le fait**
**que** l'élément de bridage (5) est réalisé sous la forme d'une collerette marginale en V.

4. Liaison de raccordement (1) selon au moins l'une des revendications 1 à 3,
**caractérisée par le fait**
**que** la partie de conduit souple (2) est réalisée sous la forme d'un soufflet à ondulations annulaires.

5. Liaison de raccordement (1) selon au moins l'une des revendications 1 à 4,
**caractérisée par le fait**
**que** le rayon de courbure (R) de la face d'étanchement (6) est sensiblement constant sur ladite face d'étanchement (6).

6. Liaison de raccordement (1) selon la revendication 5,
**caractérisée par le fait**
**que** le rapport, entre la largeur (D, d) de la face d'étanchement (6) et le rayon de courbure (R), se situe entre 0,1 et 0,4 ; est d'environ 0,25, de préférence ; et est d'environ 0,22 avec préférence maximale.
